Europäisches Patentamt

European Patent Office

Office européen des brevets

(11) Veröffentlichungsnummer: **0 392 049 B1**

(12) **EUROPÄISCHE PATENTSCHRIFT**

(45) Veröffentlichungstag der Patentschrift: **12.01.94**

(21) Anmeldenummer: **89106521.1**

(22) Anmeldetag: **12.04.89**

(51) Int. Cl.⁵: **G11B 20/00**, G10L 3/02

(54) **Verfahren zur Dehnung oder Raffung eines Zeitsignals.**

(43) Veröffentlichungstag der Anmeldung:
**17.10.90 Patentblatt 90/42**

(45) Bekanntmachung des Hinweises auf die
Patenterteilung:
**12.01.94 Patentblatt 94/02**

(84) Benannte Vertragsstaaten:
**BE CH DE ES FR GB GR IT LI NL SE**

(56) Entgegenhaltungen:
**EP-A- 0 276 753**
**DE-A- 2 938 871**
**US-A- 3 541 264**
**US-A- 4 270 025**

**THE TRANSACTIONS OF THE IECE OF JA-
PAN, Bd. E-62, Nr. 3, März 1979, Tokyo,JP;
Seiten 153 - 154; T.TAKASUGI et al.:
"Function of SPAC ( Speech Processing System by Use of Autocorrelation function )
and Fundamental Characteristics"**

**IBM TECHNICAL DISCLOSURE BULLETIN, Bd.
24, Nr. 2, Juli 1981, New York,US;Seiten 1017
- 1018; E.G.NASSIMBENE: "Speech compression and reconstruction"**

**ICASSP-International Conference on Acou-**

**stics,Speech and Signal Processing, Bd. 3, 7
April 1986, Tokyo, JP; Seiten 1705 - 1708;
MAKHOUL und A.EL-JAROUDI: "Time-scale
modification in medium to low rate speech
coding"**

**PATENT ABSTRACTS OF JAPAN, Bd. 5, Nr.
122 (P-074),7. August 1981;& JP-A-56063646**

(73) Patentinhaber: **SIEMENS AKTIENGESELL-
SCHAFT**
**Wittelsbacherplatz 2**
**D-80333 München(DE)**

(72) Erfinder: **Nottensteiner, Hans**
**Ammerseestrasse 28 1/3**
**D-8035 Gauting(DE)**

EP 0 392 049 B1

**Beschreibung**

Die Erfindung betrifft ein Verfahren zur Dehnung oder Raffung eines digitalen Zeitsignales gemäß dem Oberbegriff des Patentanspruchs 1.

Ein solches Verfahren ist aus der US-PS 4,365,115 bekannt. Hierbei werden bei einem zeitlich sich ändernden Signal, dem sogenannten Zeitsignal Segmente konstanter Länge für die Ausgabe verdoppelt bzw. ausgelassen.

Der Erfindung liegt die Aufgabe zugrunde, beim Verfahren der eingangs genannten Art die im Ausgangssignal auftretenden Verzerrungen zu reduzieren.

Diese Aufgabe wird erfindungsgemäß durch die im Patentanspruch 1 angegebenen Merkmale gelöst.

Ein Vorteil des erfindungsgemäßen Verfahrens besteht darin, daß bei einer zeitlichen Dehnung bzw. Raffung des Zeitsignals um den Faktor k die Spektralkomponenten nicht um den Faktor l/k verschoben werden, wie es bei einer Verlangsamung bzw. Erhöhung der Wiedergabegeschwindigkeit gegenüber der Aufnahmegeschwindigkeit der Fall ist.

Durch die Festlegung des Schwellwertes für den Maximalwert der Autokorrelationsfunktion läßt sich das Ausmaß der Verzerrungen einstellen, die durch das Wiederholen bzw. Auslassen nicht exakt periodische Abschnitte entstehen.

Bei dem erfindungsgemäßen Verfahren wird ein periodisches oder quasiperiodisches Zeitsignal um einen bestimmten Faktor gedehnt oder gerafft, ohne dabei die Lage der Spektralkomponenten zu verändern. Hierdurch wird bei einer vorteilhaften Anwendung des Verfahrens auf ein Sprachsignal verhindert, daß die Verständlichkeit bei gedehnten oder gerafften Sprachabschnitten verschlechtert wird.

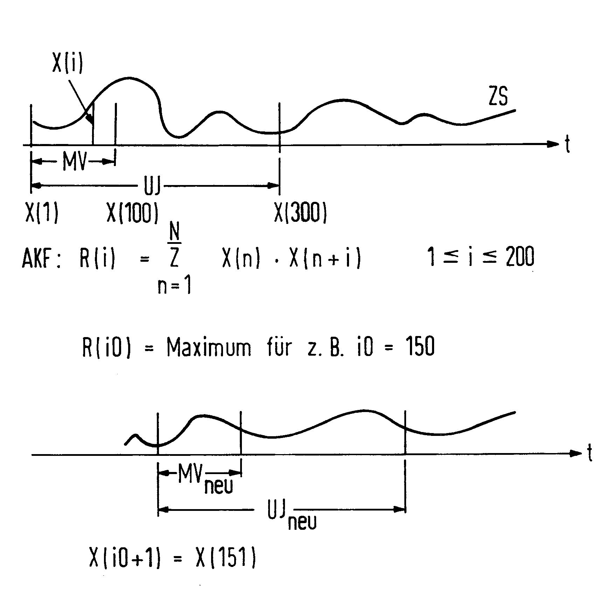

Im folgenden wird die Erfindung unter Bezugnahme auf die einzige Figur erläutert.

In der Figur ist die Hüllkurve eines digitalen Zeitsignals ZS dargestellt. Repräsentativ für die digitalen Abtastwerte X, die diese Hüllkurve bilden, ist der Abtastwert X(i) eingezeichnet. Die digitalen Abtastwerte X sind beispielsweise zeitlich veränderliche Amplitudenwerte des Zeitsignals ZS, und der Index i bezieht sich auf die Position auf der Zeitachse t.

Die Dehnung bzw. Raffung des periodischen (oder quasiperiodischen) Zeitsignals ZS wird dadurch erzeugt, indem einzelne Perioden des Zeitsignals ZS bei der Ausgabe wiederholt bzw. ausgelassen werden. Hierzu wird das Zeitsignal ZS auf Periodizität mit Hilfe der Autokorrelationsfunktion untersucht. Die Folge der Abtastwerte des Zeitsignals ZS wird in fortlaufenden Abschnitten mit vorgegebener Länge auf sich wiederholende Muster innerhalb dieser Abschnitte untersucht.

Hierzu wird ein Untersuchungsintervall UI aus beispielsweise 300 Abtastwerten X1 bis X300 gebildet. Die ersten 100 Abtastwerte im Untersuchungsintervall UI X1 bis X100 bilden einen Mustervektor MV. Dieser Mustervektor MV wird nun im Untersuchungsintervall UI solange verschoben, bis der Wert R(i) der Autokorrelationsfunktion seinen Maximalwert R(io) erreicht hat. Bei dem hier verwendeten Zahlenbeispiel sei der Zahlenwert für io beispielsweise 150, d.h. bei einem periodischen Zeitsignal ZS entspricht diesem Wert io die aktuelle Periodendauer des Zeitsignals ZS.

Bei einer Dehnung des Zeitsignals ZS werden dann die der Periodendauer entsprechenden Abtastwerte X1 bis X150 doppelt ausgegeben, bei einer Raffung des Zeitsignals ZS werden die Abtastwerte X1 bis X150 weggelassen, d.h. sie werden überhaupt nicht ausgegeben.

Zur Fortsetzung des Verfahrens wird nun mit dem auf den Abtastwert X(io) folgenden Abtastwert X(io + 1) beginnend ein neues Untersuchungsintervall UI neu gebildet. Dieses neue Untersuchungsintervall UI neu beginnt bei dem hier beschriebenen Zahlenbeispiel mit dem Abtastwert X = 151 und reicht bis zu dem Abtastwert X = 451. Wiederum bilden die ersten 100 Abtastwerte X(151) bis X(250) im Untersuchungsintervall UI neu einen neuen Mustervektor MV neu.

Das erfindungsgemäße Verfahren läßt sich nicht nur auf periodische Signalverläufe, sondern auch auf gemischte periodische/nicht periodische Signalverläufe, wie z.B. Sprache, anwenden. Zur Begrenzung bzw. Einstellung des Ausmaßes der Verzerrungen im ausgegebenen Zeitsignal wird die Operation der Wiederholung oder Auslassung von Abtastwertefolgen an eine Bedingung für das Autokorrelationsergebnis geknüpft. Die folgende, erweiterte Funktion liefert ein Maß für die Ähnlichkeit der Struktur zweier Folgen von Abtastwerten x unabhängig vom Signalpegel.

$$P(i) = \frac{\sum_{n=0}^{N-1} x(n) \cdot x(n+i)}{\sqrt{\sum_{n=0}^{N-1} x^2(n)} \cdot \sqrt{\sum_{n=0}^{N-1} x^2(n+i)}} \quad ,$$

Der Wert P(i) dieser Funktion erreicht seinen Maximalwert mit dem Wert 1 bei Kollinearität der verglichenen Vektoren, d.h. des Mustervektors MV mit einem Vektor gleicher Länge aus dem Untersuchungsintervall UI, also bei Periodizität.

Durch den Vergleich des maximalen Wertes von P(i) mit einem vorgegebenen Schwellwert erfolgt eine Klassifizierung des Ergebnisses in periodischem oder nichtperiodischem Signalverlauf. Wird der Schwellwert überschritten, erfolgt die Klassifizierung in periodischem Signalverlauf, und damit wird der aktuelle Abschnitt (vom Beginn des Untersuchungsintervalls UI bis zum Abtastwert X(io) mit P(io) = Max.) doppelt ausgegeben (bei Dehnung) oder weggelassen (bei Raffung). Wird durch den maximalen Wert von P(i) der Schwellwert nicht überschritten, so wird der aktuelle Abschnitt unverändert ausgegeben.

Durch folgende Maßnahme kann die Größe der Dehnung bzw. Raffung auf einen vorbestimmten Wert eingestellt werden. Die im Untersuchungsintervall UI abgearbeiteten und die ausgegebenen Abtastwerte x(i) werden jeweils aufsummiert. Nach jeder Ausgabe eines aktuellen Abschnitts, (d.h. bei dessen unveränderter oder doppelter Ausgabe) bzw. bei der "Nicht"-Ausgabe wird aus den beiden Summen ein Quotient gebildet. Durch Nicht-Verdoppelung bzw. durch Nicht-Auslassung des aktuellen Abschnitts wird dieser Quotient auf einen vorbestimmten Wert eingestellt.

**Patentansprüche**

1. Verfahren zur Dehnung oder Raffung eines digitalen Zeitsignals (ZS), bei dem Segmente des Zeitsignals (ZS) bei der Signalausgabe entweder mehrmals hintereinander ausgegeben (Dehnung) oder weggelassen werden (Raffung),
   **dadurch gekennzeichnet,**
   daß die Wertefolge des Zeitsignals (ZS) auf Periodizität untersucht wird,
   daß die einer einzigen Periodendauer entsprechenden Werte die Segmente bilden, die doppelt ausgegeben oder ausgelassen werden.

2. Verfahren nach Anspruch 1,
   **dadurch gekennzeichnet,**
   daß ein Untersuchungsintervall (UI) mit einer vorgegebenen Anzahl (B) von aufeinander folgenden Werten des Zeitsignals (ZS) gebildet wird,
   daß die ersten A Werte des Untersuchungsintervalls (UI) einen Mustervektor (MV) bilden,
   daß aus den A Werten des Mustervektors und aus jeweils A der nachfolgenden Werte im Untersuchungsintervall (UI) die Autokorrelationsfunktion gebildet wird, wobei durch ein Maximum des Autokorrelationsergerbnisses die Periodendauer bestimmt ist, daß die dem Maximum folgenden B Werte ein neues Untersuchungsintervall (UI neu) mit einem neuen Mustervektor (MV neu) bilden.

3. Verfahren nach Anspruch 2,
   **dadurch gekennzeichnet,**
   daß für den Maximalwert des Autokorrelationsergebnisses ein Schwellwert vorgegeben ist, bei dessen Überschreitung periodische Teile des Zeitsignals (ZS) doppelt ausgegeben oder ausgelassen werden, und sonst das Zeitsignal (ZS) unverändert ausgegeben wird.

4. Verfahren nach Anspruch 2 oder 3,
   **dadurch gekennzeichnet,**
   daß die durch die Untersuchungsintervalle (UI) abgearbeiteten Abtastwerte und die ausgegebenen Werte jeweils aufsummiert werden,
   daß aus den beiden Summen der Quotient gebildet wird, und daß durch eine Nichtverdopplung (bei Dehnung) oder durch ein Nichtauslassen (bei Raffung) von Abtastwerten des Zeitsignals (ZS) dieser Quotient auf einen vorbestimmten Wert eingestellt wird.

**5.** Verfahren nach einem der Ansprüche 1 bis 4,
**dadurch gekennzeichnet,**
daß das Zeitsignal (ZS) ein Sprachsignal ist.

**Claims**

**1.** Method for expanding or compressing a digital time signal (ZS), in which during the signal output segments of the time signal (ZS) are either output repeatedly in succession (expansion) or omitted (compression), characterized in that the sequence of values of the time signal (ZS) is examined for periodicity, and in that the values corresponding to a single period form the segments, which are output in duplicate or omitted.

**2.** Method according to Claim 1, characterized in that an examination interval (UI) having a prescribed number (B) of mutually sequential values of the time signal (ZS) is formed, in that the first A values of the examination interval (UI) form a master vector (MV), in that the autocorrelation function is formed from the A values of the master vector and from in each case A of the succeeding values in the examination interval (UI), the period being determined by a maximum in the autocorrelation result, and in that the B values following the maximum form a new examination interval (UI new) having a new master vector (MV new).

**3.** Method according to Claim 2, characterized in that there is provided for the maximum value of the autocorrelation result a threshold value upon the over-shooting of which periodic parts of the time signal (ZS) are output in duplicate or omitted, and otherwise the time signal (ZS) is output unchanged.

**4.** Method according to Claim 2 or 3, characterized in that the sampled values processed through the examination intervals (UI) and the output values are summed up in each case, in that the quotient is formed from the two sums, and in that this quotient is set to a predetermined value by a non-doubling (in the case of expansion) or by a non-omission (in the case of compression) of sampled values of the time signal (ZS).

**5.** Method according to one of Claims 1 to 4, characterized in that the time signal (ZS) is a voice signal.

**Revendications**

**1.** Procédé pour dilater ou comprimer un signal temporel numérique (ZS), selon lequel des segments du signal temporel (ZS) sont délivrés d'une manière réitérée les uns derrière les autres (dilatation) ou sont supprimés (compression) lors de la délivrance du signal,
caractérisé par le fait
qu'on examine la périodicité de la suite des valeurs du signal temporel (ZS), et
que les valeurs qui correspondent à une seule durée de la période, forment les segments qui sont délivrés en double ou sont supprimés.

**2.** Procédé suivant la revendication 1, caractérisé par le fait
qu'on forme un intervalle d'examen (UI) avec un nombre prédéterminé (B) de valeurs successives du signal temporel (ZS),
que les premières valeurs A de l'intervalle d'examen (UI) forment un vecteur modèle (MV),
qu'à partir des valeurs A du vecteur modèle et à partir respectivement de A des valeurs suivantes dans l'intervalle d'examen (UI), on forme la fonction d'autocorrélation, un maximum du résultat de l'autocorrélation déterminant la durée de la période, et
que les valeurs B, qui interviennent à la suite du maximum, forment un nouvel intervalle d'examen (UI nouveau) avec un nouveau vecteur modèle (MV nouveau).

**3.** Procédé suivant la revendication 2, caractérisé par le fait que pour la valeur maximale du résultat d'autocorrélation est prédéterminée une valeur de seuil, lors du dépassement de laquelle des parties périodiques du signal temporel (ZS) sont délivrées en double ou sont supprimées, et que par ailleurs le signal temporel (ZS) est délivré sans modification.

4. Procédé suivant la revendication 2 ou 3, caractérisé par le fait
qu'on additionne respectivement les valeurs d'échantillonnage élaborées au moyen des intervalles d'examen (UI), et les valeurs délivrées,
qu'on forme le quotient à partir des deux sommes, et
qu'on règle ce quotient sur une valeur prédéterminée au moyen d'un non doublement (lors de la dilatation) ou d'une non suppression (lors de la compression) de valeurs d'échantillonnage du signal temporel (ZS).

5. Procédé suivant l'une des revendications 1 à 4, caractérisé par le fait que le signal temporel (ZS) est un signal vocal.

$$\text{AKF:} \quad R(i) \;=\; \sum_{n=1}^{N} \; X(n) \cdot X(n+i) \qquad 1 \le i \le 200$$

$$R(i0) = \text{Maximum für z. B. } i0 = 150$$

$$X(i0+1) = X(151)$$